# EUROPEAN PATENT APPLICATION

(11) **EP 4 491 549 A1**
(43) Date of publication of application: **15.01.2025**
(21) Application number: 23779996.0
(22) Date of filing: 23.03.2023
(51) Int. Cl.: B65G 54/02, B65G 47/52, B65G 47/84

(54) **CONVEYANCE SYSTEM AND PROGRAM**

(30) Priority: 31.03.2022 JP 2022058871
(71) Applicant: Fuji Seal International, Inc., Osaka-shi, Osaka 532-0003 (JP)
(72) Inventor: MURASE Takayuki, Osaka-shi, Osaka 532-0003 (JP)
(74) Representative: Prüfer & Partner mbB Patentanwälte · Rechtsanwälte
(86) International application number: PCT/JP2023/011356
(87) International publication number: WO 2023/189985

(57) **Abstract**

Provided is a conveyance system that can convey an article in a stable state by two moving bodies without pinching the article between the two moving bodies. The conveyance system includes a track device constituting a conveyance path, moving bodies 30A, 30B moving along the conveyance path, and a control device controlling positions of the moving bodies 30A, 30B on the conveyance path. The moving body 30A and the moving body 30B are connected to each other such that a distance between the moving body 30A and the moving body 30B can be adjusted. The moving body 30A includes a holding unit (gripping mechanism 351) that holds an article with a slider 351A and a slider 351B. The holding unit (gripping mechanism 351) changes a distance between the slider 351A and the slider 351B in accordance with the distance between the moving body 30A and the moving body 30B. The control device controls the distance between the moving body 30A and the moving body 30B.

## Description

### Technical Field

The present disclosure relates to a conveyance system and a program for conveying articles.

### Background Art

In the related art, a linear motor type conveyance device is known. For example, JP 2021-160909 A (Patent Document 1) discloses, as such a conveyance device, a linear conveyance device including a guide portion (specifically, a guide rail) disposed in a looped shape, a first holding portion and a second holding portion which are disposed at the guide portion and movable along a conveyance direction, and a linear driving portion which controls movement of the first holding portion and the second holding portion.

The first holding portion includes a first arm portion which protrudes outward with its angle relative to the conveyance direction fixed. The second holding portion includes a second arm portion which protrudes outward and whose tip portion can swing along the conveyance direction, and a biasing portion which biases the second arm portion. The first arm portion holds the rear of a conveyance object and the second arm portion holds the front of the conveyance object. The linear driving portion controls a distance between the first holding portion and the second holding portion along the conveyance direction in accordance with the curvature radius of the guide rail. Specifically, the linear driving portion increases the distance between the first holding portion and the second holding portion along the conveyance direction as the curvature radius of the guide rail decreases.

JP 2021-160910 A (Patent Document 2) discloses a linear conveyance device including a first holding portion and a second holding portion which are movable along a guide portion having a linear portion and a curved portion, and a linear driving portion. The first holding portion includes a first pressing portion which makes surface contact with a rear surface of a conveyance object in a conveyance direction, and a first claw portions which protrudes forward in the conveyance direction and is inserted into a recessed portion opening on the rear surface of the conveyance object. The second holding portion includes a second pressing portion which makes surface contact with a front surface of the conveyance object in the conveyance direction, and a second claw portions which protrudes rearward in the conveyance direction and is inserted into a recessed portion opening on the front surface of the conveyance object. The linear driving portion adjusts a distance between the first holding portion and the second holding portion in the curved portion to be shorter than the distance in the linear portion.

### Citation List

### Patent Literature

Patent Document 1: JP 2021-160909 A
Patent Document 2: JP 2021-160910 A

### Summary of Invention

### Technical Problem

As described above, the linear conveyance devices of Patent Documents 1 and 2 convey the conveyance object while pinching the conveyance object with the two holding portions (moving bodies) whose positions are individually controlled. With such a device configuration, in the linear conveyance device of Patent Document 1, the arm portion needs to be swingable along the conveyance direction as described above from the viewpoint of causing both holding portions to pass along the curved guide rail without changing the gripping positions of the conveyance object. In the linear conveyance device of Patent Document 2, since the arm portion is not configured to be swingable, the conveyance object cannot be conveyed in a stable state when the conveyance object is not formed with the two recessed portions into which the two claw portions are inserted.

The present disclosure has been made in view of the above-described problem, and an object of the present disclosure is to provide a conveyance system and a program that can convey an article in a stable state by two moving bodies without pinching the article between the two moving bodies.

### Solution to Problem

According to the present disclosure, a conveyance system that conveys an article along a conveyance path by a linear motor includes: a track device that functions as a stator of the linear motor and constitutes the conveyance path; a first moving body and a second moving body that move along the conveyance path as movable elements of the linear motor; and a control device that controls positions of the first moving body and the second moving body on the conveyance path. The first moving body and the second moving body are connected to each other such that a distance between the first moving body and the second moving body can be adjusted. The first moving body includes a holding mechanism that includes a first member and a second member and that holds an article with the first member and the second member. The holding mechanism changes a distance between the first member and the second member in accordance with the distance between the first moving body and the second moving body. The control device controls the distance between the first moving body and the second moving body.

According to another aspect of the present disclosure, in the conveyance system, the first moving body and the second moving body move along a predetermined conveyance path. The first moving body and the second moving body are connected to each other such that a distance between the first moving body and the second moving body can be adjusted. The first moving body includes a holding mechanism that holds an article with the first member and the second member. The holding mechanism is configured to change a distance between the first member and the second member in accordance with the distance between the first moving body and the second moving body. A program for controlling a conveyance system of a linear type causes a computer of the conveyance system to execute: controlling a distance between a first moving body and a second moving body to a first distance based on the first moving body reaching a first position; and controlling the distance between the first moving body and the second moving body to a second distance based on the first moving body reaching a second position. The first distance is a distance at which an article is held by the first member and the second member. The second distance is a distance at which the holding of the article by the first member and the second member is released.

### Advantageous Effects of Invention

According to the disclosure as described above, an article can be conveyed in a stable state by the two moving bodies without pinching the article between the two moving bodies.

### Brief Description of Drawings

FIG. 1 is a perspective view illustrating a schematic configuration of a conveyance system.
FIG. 2 is a block diagram for explaining a control device and a track device.
FIG. 3 is a diagram for explaining a segment.
FIG. 4 is a perspective view of a moving body unit.
FIG. 5 is a side view of an article holding portion in a state in which an article is placed on a table.
FIG. 6 is a cross-sectional view taken along the line J-J in FIG. 5 before an article is gripped or after gripping is released.
FIG. 7 is a cross-sectional view taken along the line K-K in FIG. 5 before an article is gripped or after gripping is released.
FIG. 8 is a cross-sectional view taken along the line J-J in FIG. 5 when an article is gripped.
FIG. 9 is a cross-sectional view taken along the line K-K in FIG. 5 when an article is gripped.
FIG. 10 is a diagram illustrating the moving body unit before an article is gripped or after gripping is released.
FIG. 11 is a diagram illustrating the moving body unit when an article is gripped.
FIG. 12 is a flowchart for explaining a flow of position control for a moving body by the control device.

### Description of Embodiments

Hereinafter, embodiments according to the present invention will be described with reference to the drawings. In the following description, the same parts and constituent elements are denoted by the same reference signs. The names and functions thereof are also the same. Thus, detailed descriptions thereof will not be repeated.

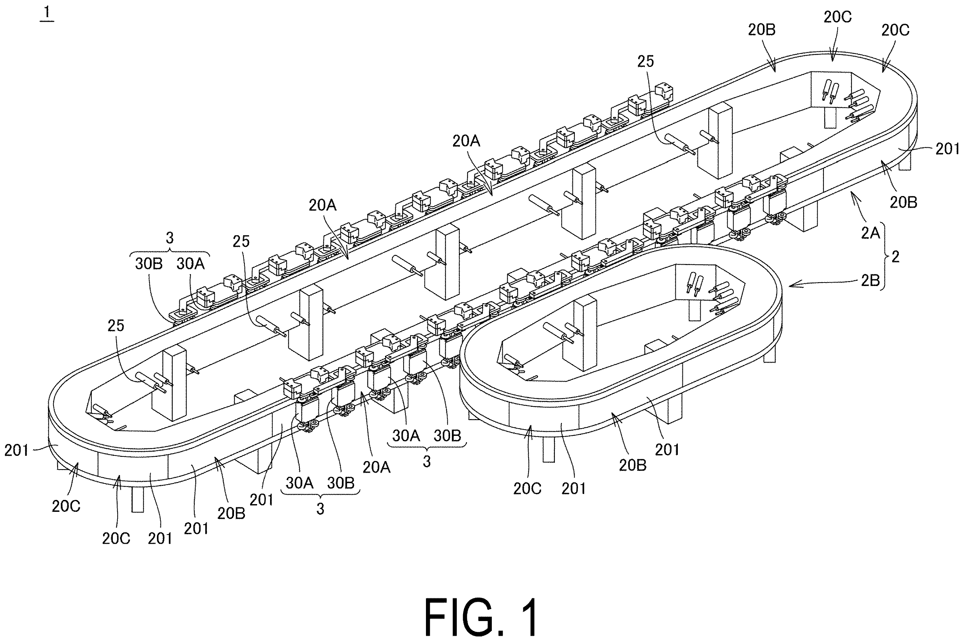

<A. System Configuration> FIG. 1 is a perspective view illustrating a schematic configuration of a conveyance system according to the present embodiment. As illustrated in FIG. 1, a conveyance system 1 includes a track device 2 and a plurality of moving body units 3. The conveyance system 1 is a linear motor type conveyance system. The conveyance system 1 conveys an article (conveyance object) along a conveyance path by a linear motor.

The track device 2 constitutes a conveyance path for the article. The track device 2 functions as a stator of the linear motor. In the present example, the track device 2 includes a track device 2A and a track device 2B.

The track device 2 includes a plurality of segments 20A, a plurality of segments 20B, and a plurality of segments 20C. Each of the segments 20A, 20B, 20C includes a sidewall 201 serving as the conveyance path. The segment 20A constitutes a linear conveyance path. The segment 20B constitutes a linear and curved conveyance path. The segment 20C constitutes a curved (non-linear) conveyance path. A plurality of coils are built in each of the segments 20A, 20B, 20C along the sidewall 201. By controlling the direction of the current flowing through each coil, each coil functions as an electromagnet.

The track device 2 further includes connection terminals 25 for connecting the respective segments 20A, 20B, 20C to a control device (typically, a control panel) to be described below. Hereinafter, for convenience of description, when any one of the segments 20A, 20B, 20C is indicated without being distinguished from each other, the one segment is referred to as a "segment 20". Similarly, when any one of moving bodies 30A, 30B is indicated without being distinguished from each other, the one moving body is referred to as a "moving body 30".

Each moving body unit 3 includes a moving body 30A and a moving body 30B. In the same moving body unit 3, the moving body 30A and the moving body 30B are coupled to each other. Each of the moving body 30A and the moving body 30B moves along the conveyance path as a movable element of the linear motor.

A permanent magnet is built in each of the moving bodies 30A, 30B. Specifically, a permanent magnet in which an N pole and an S pole are formed along a conveyance direction is built in each of the moving bodies 30A, 30B. By controlling the current flowing through each coil 23 of the track device 2, a repulsive force and an attractive force with respect to the electromagnet are generated at the permanent magnet. Accordingly, each of the moving bodies 30A, 30B moves along the conveyance path.

In the present example, the moving body unit 3 can move from the conveyance path of the track device 2A to the conveyance path of the track device 2B, and can move from the conveyance path of the track device 2B to the conveyance path of the track device 2A.

The movement of each of the moving bodies 30A, 30B is controlled by the control device. Specifically, a user stores a control program in the control device in advance, and the control device executes the control program to control the position of each of the moving bodies 30A, 30B.

In this way, the conveyance system 1 conveys an article along the conveyance path by the linear motor. The conveyance system 1 includes the track device 2 that functions as a stator of the linear motor and constitutes the conveyance path, the moving body 30A and the moving body 30B that move along the conveyance path as movable elements of the linear motor, and the control device that controls positions of the moving body 30A and the moving body 30B on the conveyance path.

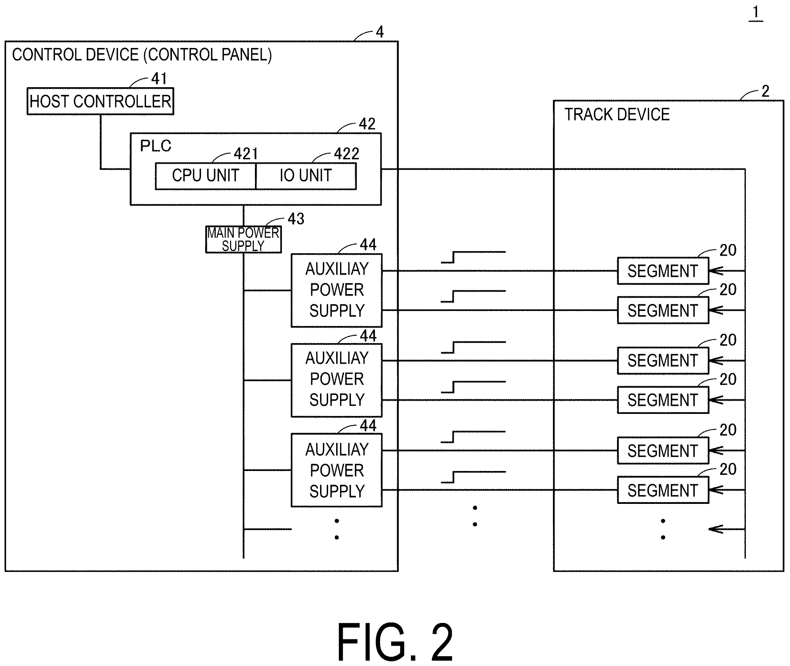

FIG. 2 is a block diagram for explaining the control device and the track device 2. As illustrated in FIG. 2, a control device 4 and the track device 2 are electrically connected to each other.

The control device 4 includes a host controller 41, a programmable logic controller (PLC) 42, a main power supply 43, and a plurality of auxiliary power supplies 44. The PLC 42 includes a CPU unit 421 and an IO unit 422. The IO unit 422 is communicably connected to the CPU unit 421.

The PLC 42 is connected to the host controller 41 and the main power supply 43. The PLC 42 is communicably connected to the main power supply 43, typically by Ethernet (registered trademark). Specifically, the PLC 42 is communicably connected to the main power supply 43 by ETHERNET Powerlink (registered trademark).

The PLC 42 receives the above-described control program from the host controller 41 and stores the control program in a memory in the CPU unit 421. The CPU unit 421 periodically executes the control program.

The PLC 42 controls power supply from the main power supply 43 to each auxiliary power supply 44. In the present example, each auxiliary power supply 44 is connected to two segments 20. Each auxiliary power supply 44 supplies a direct current of a predetermined voltage to each segment 20. The auxiliary power supply 44 and the segment 20 are connected by a power supply cable.

The PLC 42 is further connected to each segment 20 of the track device 2. In the present example, the PLC 42 is communicably connected to each segment 20 by an IO link.

More specifically, the PLC 42 is typically connected to another device such as a vision sensor (not illustrated). In addition, the PLC 42 is configured to be communicable with, for example, an inverter module that transmits a command to a motor (not illustrated) or the like.

In a broad sense, the control device 4 corresponds to "the control device" or "the computer" of the present invention. In a narrow sense, the PLC 42 corresponds to "the control device" or "the computer" of the present invention.

In a narrower sense, the CPU unit 421 which is a processor corresponds to "the computer" of the present invention.

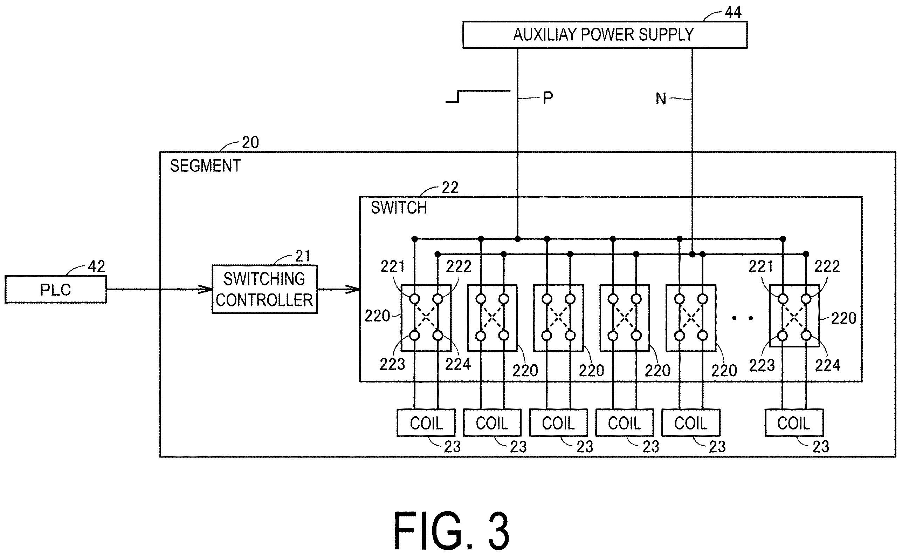

FIG. 3 is a diagram for explaining the segment 20. As illustrated in FIG. 3, the segment 20 includes a switching controller 21, a switch 22, and a plurality of coils 23. The switch 22 includes a plurality of switching elements 220. Each of the plurality of switching elements 220 is connected to one of the coils 23 mutually different from each other.

In the present example, each switching element 220 includes four terminals 221, 222, 223, 224. The respective terminals 221, 222 are connected to the auxiliary power supply 44. Specifically, each terminal 221 is connected to a wire P on a positive pole side. Each terminal 222 is connected to a neutral wire N (for example, a ground line). Each terminal 223 is connected to one of both ends of the coil 23. Each terminal 224 is connected to the other end of the coil 23.

The switching controller 21 switches the connection of each switching element based on a command from the PLC 42. As a first connection mode, the switching controller 21 connects the terminal 221 and the terminal 223 and connects the terminal 222 and the terminal 224 as indicated by solid lines. In addition, as a second connection mode, the terminal 221 and the terminal 224 are connected to each other and the terminal 222 and the terminal 223 are connected to each other as indicated by broken lines.

The switching controller 21 switches the connection modes of the terminals between the first connection mode and the second connection mode, whereby the direction of a magnetic field generated by the coil 23 can be inverted. That is, the polarity of the coil 23 can be switched between the N pole and the S pole.

The switching controller 21 controls switching of each switching element 220, whereby the positions of the moving body 30A and the moving body 30B can be individually controlled.

Note that the configuration illustrated in FIG. 3 is an example of a simple circuit, and the circuit configuration for realizing linear conveyance is not limited thereto. A plurality of coils may be used to generate a magnetic force that causes each moving body 30 to individually move forward or backward to a designated position at a designated speed. For example, two wires P1 and P2 on the positive pole side may be provided instead of the wire P on the positive pole side, and alternating currents having phases different from each other by 90° may be supplied to the wire P1 and the wire P2. In that case, a switching element only needs to be configured such that the following connections can be made.

As a first connection mode, the wire P1 and the terminal 223 are connected to each other, and the neutral wire N and the terminal 224 are connected to each other. As a second connection mode, the wire P1 and the terminal 224 are connected to each other, and the neutral wire N and the terminal 223 are connected to each other. As a third connection mode, the wire P2 and the terminal 223 are connected to each other, and the neutral wire N and the terminal 224 are connected to each other. As a fourth connection mode, the wire P2 and the terminal 224 are connected to each other, and the neutral wire N and the terminal 223 are connected to each other. With such a configuration, it is possible to perform position control for each moving body 30 with higher accuracy.

The configuration of each segment is already known and will not be described in further detail here.

<B. Moving Body> In the following description, for convenience of description, a case in which the conveyance direction of an article 900 on the conveyance path is in one direction and the moving body 30A out of the moving body 30A and the moving body 30B is on the leading side will be described as an example.

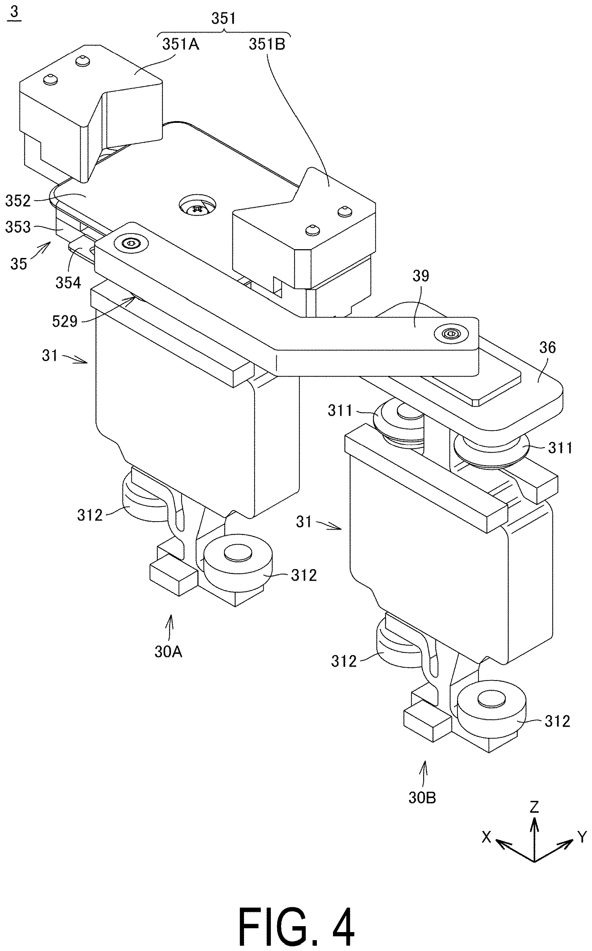

FIG. 4 is a perspective view of the moving body unit 3. As illustrated in FIG. 4, the moving body unit 3 includes the moving body 30A, the moving body 30B, and a connection member 39 that connects the moving body 30A and the moving body 30B. As will be described below, the moving body 30A and the moving body 30B are connected to each other via the connection member 39 such that a distance between the moving body 30A and the moving body 30B can be adjusted. Specifically, the connection member 39 is connected to the moving body 30A so as to be movable relative to the moving body 30A.

The moving body 30A includes a main body portion 31 and an article holding portion 35. The main body portion 31 is also referred to as a "shuttle". The article holding portion 35 is an attachment attached to the shuttle. Similarly to the moving body 30A, the moving body 30B also includes a main body portion 31. The moving body 30B further includes a pedestal 36.

The main body portion 31 of each of the moving body 30A and the moving body 30B includes two upper wheels 311 and two lower wheels 312. The above-described permanent magnet is built in the main body portion 31. The main body portion 31 is movably attached to the sidewall 201 of the track device 2. Specifically, the track device 2 includes a guide rail. The main body portion 31 is attached to the guide rail so as not to fall down. More specifically, a guide rail for the upper wheels 311 and a guide rail for the lower wheels 312 are provided at the sidewall 201.

The article holding portion 35 is attached to an upper portion of the main body portion 31. The article holding portion 35 includes a gripping mechanism 351, a table 352, a base 353, and a projection portion 354. The gripping mechanism 351 is a link mechanism. The gripping mechanism 351 includes a slider 351A on a leading side and a slider 351B on a trailing side, each functioning as a link.

An article such as a container is placed on the table 352. As will be described below, in the conveyance system 1, an article placed on the table 352 can be gripped by the slider 351A and the slider 351B. In addition, in the conveyance system 1, the article gripped by the slider 351A and the slider 351B can be released.

The pedestal 36 of the moving body 30B is attached to an upper portion of the main body portion 31 of the moving body 30B. One end of the connection member 39 is fixed to the pedestal 36. In the present example, the connection member 39 is a plate-like member made of metal. The other end of the connection member 39 is attached to the article holding portion 35 of the moving body 30A. The connection member 39 is bent in the vicinity of the center in a top view. The connection member 39 has a boomerang shape in a top view.

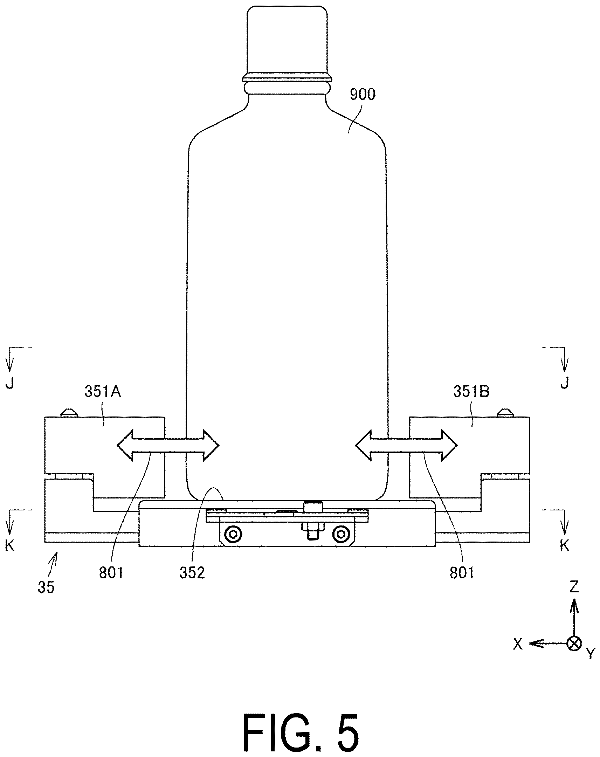

FIG. 5 is a side view of the article holding portion 35 in a state in which an article is placed on the table 352. As illustrated in FIG. 5, the article 900 as a conveyance target is placed on the table 352. In the present example, a container is taken as an example of the article 900.

The slider 351A and the slider 351B are slidable in a direction indicated by arrows 801 (horizontal direction in the drawing). By moving the slider 351A and the slider 351B in directions approaching each other, the article 900 is gripped by the slider 351A and the slider 351B. By moving the slider 351A and the slider 351B in directions away from each other, gripping of the article 900 by the slider 351Aand the slider 351B is released.

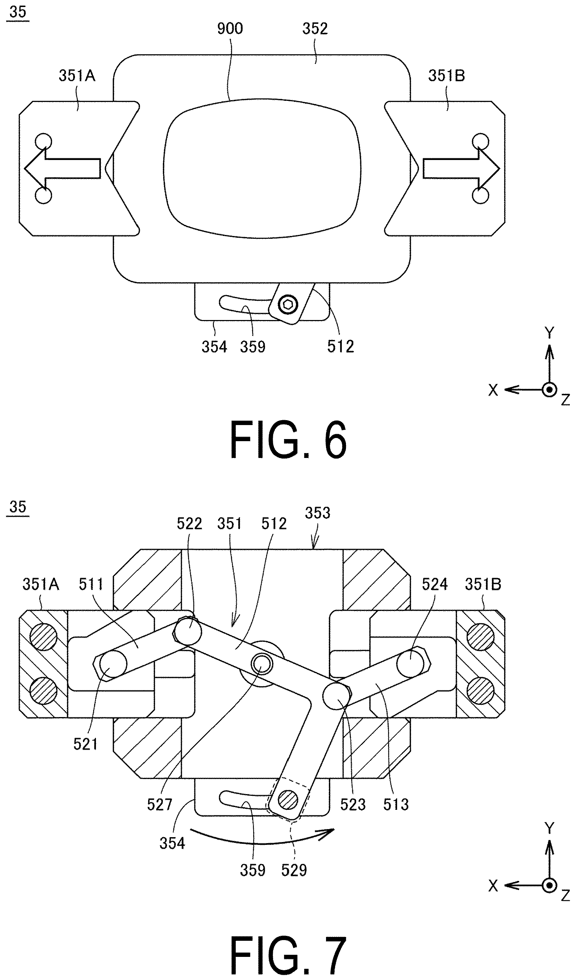

FIG. 6 is a cross-sectional view taken along the line J-J in FIG. 5 before the article 900 is gripped or after gripping is released. As illustrated in FIG. 6, an opening 359 having an arc shape is formed in the projection portion 354. The article 900 is placed on the table 352.

The slider 351A and the slider 351B are moved to positions at which they are most separated from each other. Specifically, the slider 351A and the slider 351B are moved to the full in the directions of the arrows. Thus, the article 900 is not gripped by the slider 351A and the slider 351B.

FIG. 7 is a cross-sectional view taken along the line K-K in FIG. 5 before the article 900 is gripped or after gripping is released. That is, the positions of the slider 351A and the slider 351B are the same as in FIG. 6 and FIG. 7.

As illustrated in FIG. 7, in addition to the sliders 351A, 351B, the gripping mechanism 351 further includes three links 511, 512, 513 and four joints 521, 522, 523, 524. The link 512 is a driver. The links 511, 513 are intermediate links. The sliders 351A, 351B are followers.

Specifically, the slider 351A and the link 511 are connected by the joint 521. The link 511 and the link 512 are connected by the joint 522. The link 511 and the link 513 are connected by the joint 523. The link 513 and the slider 351B are connected by the joint 524.

The gripping mechanism 351 is rotatably attached to the base 353 at a central portion 527 of the link 512. One end of the link 512 is positioned over the projection portion 354 in a top view.

The gripping mechanism 351 further includes a movable portion 529 to which the connection member 39 is connected (see FIG. 4). In the present example, the one end of the link 512 is the movable portion 529. The movable portion 529 is a portion (a part of the link 512) that causes the link 512, which is the driver, to operate when an external force acts on the movable portion 529.

A projected portion (not illustrated) is provided on a lower surface of the movable portion 529. The projected portion is fitted into the opening 359 of the projection portion 354. The projected portion moves along the inner wall surface of the opening 359. The connection member 39 moves relative to the moving body 30A by the movement of the movable portion 529. Hereinafter, with respect to the moving body 30A, an X-axis positive direction side is referred to as a "front end side", and an X-axis negative direction side is referred to as a "rear end side" for convenience of description.

In the state of FIG. 7, the projected portion is positioned on the rear end side of the opening 359 (the rearmost position in the opening) in a top view. That is, the movable portion 529 is positioned on the rear end side of the opening 359. In this case, the slider 351A and the slider 351B are located at positions at which they are most separated by the links 512, 511, 513. Specifically, the slider 351A is positioned on the most front end side within the movable range of the slider 351A, and the slider 351B is positioned on the most rear end side within the movable range of the slider 351B.

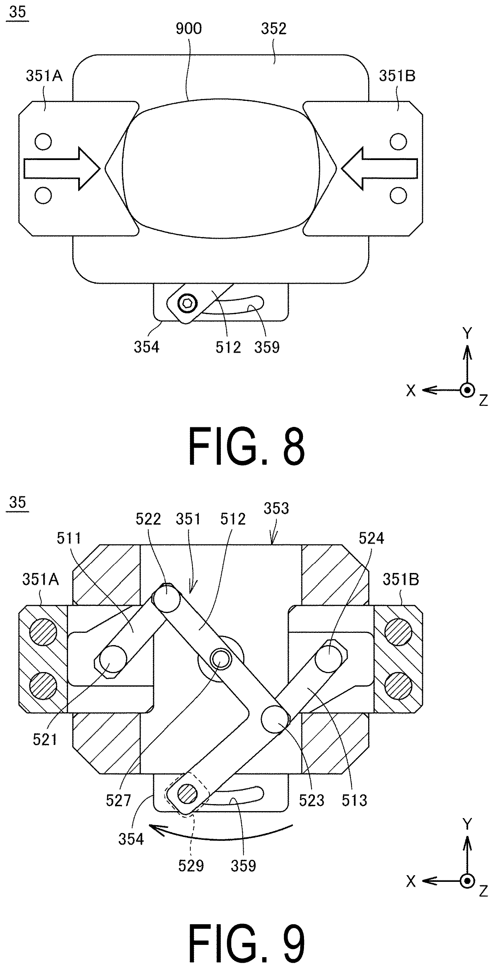

FIG. 8 is a cross-sectional view taken along the line J-J in FIG. 5 when the article 900 is gripped. As illustrated in FIG. 8, the article 900 is placed on the table 352. The slider 351A and the slider 351B are closer to each other than in the state of FIG. 6. The present example illustrates a state in which the slider 351A and the slider 351B are moved to positions at which they are closest to each other. Specifically, the slider 351A and the slider 351B are moved to the full in the directions of the arrows. Thus, the article 900 is gripped by the slider 351A and the slider 351B.

FIG. 9 is a cross-sectional view taken along the line K-K in FIG. 5 when the article 900 is gripped. As illustrated in FIG. 9, the projected portion is positioned on the front end side of the opening 359 (the foremost position in the opening) in a top view. That is, the movable portion 529 is positioned on the front end side of the opening 359. In this case, the slider 351A and the slider 351B are closest to each other by the links 512, 511, 513. Specifically, the slider 351A is positioned on the most rear end side within the movable range of the slider 351A, and the slider 351B is positioned on the most front end side within the movable range of the slider 351B.

As described above, in the moving body 30A, a distance between the slider 351A and the slider 351B can be changed in accordance with the position of the movable portion 529. That is, in the conveyance system 1, the distance between the slider 351A and the slider 351B can be changed by controlling the position of the movable portion 529 with respect to the opening 359. Hereinafter, control of the position of the movable portion 529 will be described.

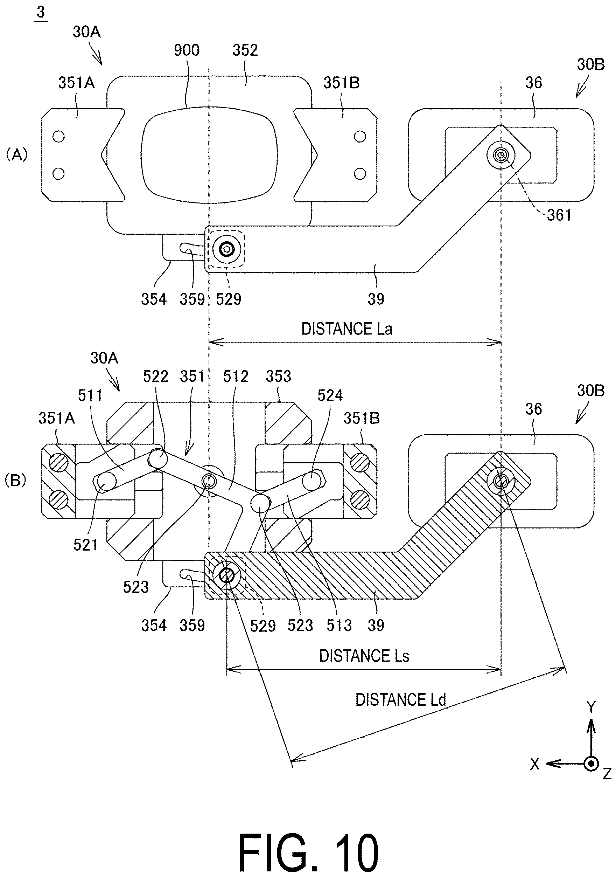

FIG. 10 is a diagram illustrating the moving body unit 3 before the article 900 is gripped or after gripping is released. As illustrated in FIG. 10, the connection member 39 is fixed, at one end thereof, to a central portion 361 of the pedestal 36 of the moving body 30B. The connection member 39 is fixed, at the other end thereof, to the movable portion 529 of the moving body 30A. Specifically, the connection member 39 is fixed so as to be rotatable on an XY plane with respect to the pedestal 36 and rotatable on an XY plane with respect to the movable portion 529.

As described above, since the connection member 39 is fixed to the movable portion 529 of the moving body 30A, the connection member 39 can move relative to the moving body 30A. Accordingly, in the conveyance system 1, the distance between the moving body 30A and the moving body 30B can be changed.

The state (A) of FIG. 10 is a diagram of the moving body 30A as viewed in the direction of the line J-J in FIG. 5. The state (B) is a diagram of the moving body 30A as viewed in the direction of the line K-K in FIG. 5. Specifically, the moving body 30A illustrated in the state (A) corresponds to the moving body 30A illustrated in FIG. 6. The moving body 30A illustrated in the state (B) corresponds to the moving body 30A illustrated in FIG. 7.

In the conveyance system 1, as described above, the control device 4 (see FIG. 2) individually controls the moving body 30A and the moving body 30B included in each moving body unit 3. When the moving body unit 3 reaches a predetermined position (hereinafter, also referred to as a "position Pa"), the control device 4 makes the distance between the moving body 30A and the moving body 30B larger than when the article 900 is conveyed. In the present example, the control device 4 increases the distance between the moving body 30A and the moving body 30B by controlling the relative position of the moving body 30B with respect to the moving body 30A.

Specifically, when the moving body 30A of the moving body unit 3 reaches the position Pa, the control device 4 controls the positions of the moving body 30A and the moving body 30B such that the distance between the moving body 30A and the moving body 30B is maximized (a upper limit value within a separation range). A distance (distance in the X-axis direction) between the center of the moving body 30A and the center of the moving body 30B at this time is also referred to as a "distance La".

By such control, the movable portion 529 of the gripping mechanism 351 of the moving body 30A can be moved to the rear end side of the opening 359. Accordingly, the slider 351A and the slider 351B are located at positions at which they are most separated.

Note that in FIG. 10, a linear distance between the central portion 361 of the pedestal 36 and the movable portion 529 is represented as a distance Ld. A separation distance between the central portion 361 of the pedestal 36 and the movable portion 529 in the X-axis direction is represented as a distance Ls. In the present example, the distance La described above is longer than the distance Ls.

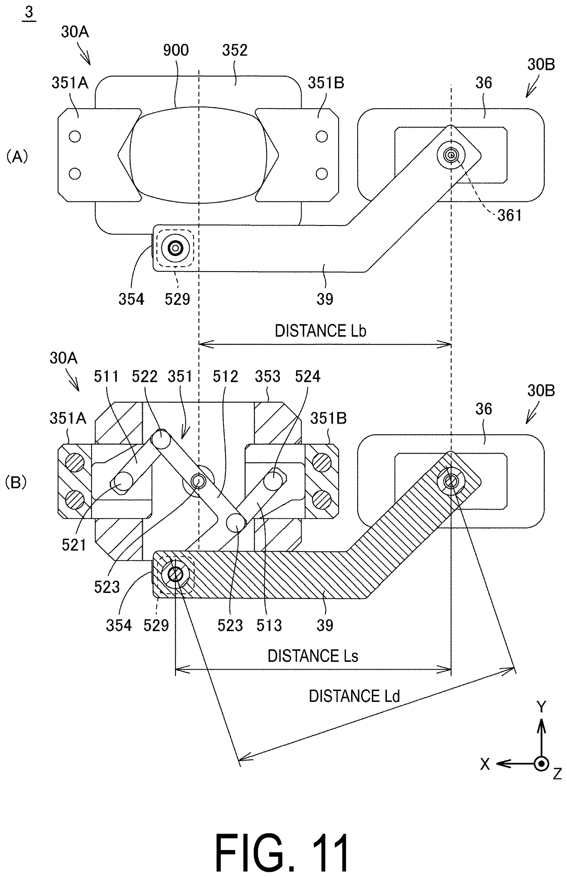

FIG. 11 is a diagram illustrating the moving body unit 3 when the article 900 is gripped. As illustrated in FIG. 10, the state (A) is a diagram of the moving body 30A as viewed in the direction of the line J-J in FIG. 5. The state (B) is a diagram of the moving body 30A as viewed in the direction of the line K-K in FIG. 5. Specifically, the moving body 30A illustrated in the state (A) corresponds to the moving body 30A illustrated in FIG. 8. The moving body 30A illustrated in the state (B) corresponds to the moving body 30A illustrated in FIG. 9.

When the moving body unit 3 reaches a predetermined position other than the position Pa (hereinafter, also referred to as a "position Pb"), the control device 4 makes the distance between the moving body 30A and the moving body 30B smaller than in the case of the position Pa. Specifically, when the moving body 30A of the moving body unit 3 reaches the position Pb, the control device 4 controls the positions of the moving body 30A and the moving body 30B such that the distance between the moving body 30A and the moving body 30B is minimized (a lower limit value within the separation range). A distance (distance in the X-axis direction) between the center of the moving body 30A and the center of the moving body 30B at this time is also referred to as a "distance Lb". The distance Lb is shorter than the distance La illustrated in FIG. 10. Further, in the present example, the distance Lb is shorter than the distance Ls.

By the above-described control, the movable portion 529 of the gripping mechanism 351 of the moving body 30A can be moved to the front end side of the opening 359. Accordingly, the slider 351A and the slider 351B are located at positions at which they are closest to each other. Thus, when the article 900 is placed on the table 352, the article 900 can be gripped by the slider 351A and the slider 351B.

In gripping the article 900, it is not necessary to move the movable portion 529 up to an end of the opening 359 depending on the size of the article. For example, in conveying an article longer in the X-axis direction than the article 900 illustrated in FIG. 11 in a gripped state, the article can be gripped without moving the movable portion 529 up to the front end of the opening 359. The control device 4 only needs to control the positions of the moving body 30A and the moving body 30B such that the distance between the moving body 30A and the moving body 30B becomes a distance corresponding to the size of the article during conveyance of the article. In this respect, the conveyance system 1 is excellent in versatility.

As described above, the moving body 30A and the moving body 30B are connected to each other such that the distance between the moving body 30A and the moving body 30B can be adjusted. The moving body 30A includes the slider 351A and the slider 351B, and includes the gripping mechanism 351 that grips the article 900 by the slider 351A and the slider 351B. The gripping mechanism 351 changes the distance between the slider 351A and the slider 351B in accordance with the distance between the moving body 30A and the moving body 30B. The control device 4 controls the distance between the slider 351A and the slider 351B.

According to such a configuration, the control device 4 can change the distance between the slider 351A and the slider 351B by controlling the distance between the moving body 30A and the moving body 30B. Thus, the article 900 can be gripped or gripping can be released by the control device 4 controlling the distance between the moving body 30A and the moving body 30B. Therefore, according to the conveyance system 1, it is possible to convey an article in a stable state by the two moving bodies without pinching the article between the two moving bodies.

Specifically, the conveyance system 1 further includes the connection member 39 that connects the moving body 30A and the moving body 30B. The connection member 39 is connected to the moving body 30A so as to be movable relative to the moving body 30A. According to such a configuration, the distance between the moving body 30A and the moving body 30B can be changed.

More specifically, the gripping mechanism 351 further includes the movable portion 529 to which the connection member 39 is connected, and changes the distance between the slider 351A and the slider 351B in accordance with the position of the movable portion 529. The position of the movable portion 529 changes in accordance with the distance between the moving body 30A and the moving body 30B. According to such a configuration, the control device 4 can change the distance between the slider 351A and the slider 351B by controlling the distance between the moving body 30A and the moving body 30B so as to change the position of the movable portion 529.

Incidentally, when the distance between the moving body 30A and the moving body 30B is kept constant at the distance Lb during conveyance of the article 900, the gripping state changes between a linear conveyance path and a curved conveyance path. In addition, the gripping state of the article 900 also changes when the curvature of a curved section varies. Then, the control device 4 sets the above-described distance Lb as a separation distance in a linear section and finely adjusts the distance Lb in accordance with the curvature of the conveyance path. That is, the control device 4 controls the distance between the moving body 30A and the moving body 30B such that the distance between the slider 351A and the slider 351B is maintained constant on the linear conveyance path and the non-linear conveyance path. Specifically, the control device 4 controls the distance between the moving body 30A and the moving body 30B such that the distance between the slider 351A and the slider 351B on the linear conveyance path and the distance between the slider 351A and the slider 351B on the non-linear conveyance path are the same (constant). When the control device 4 performs such control, the moving body 30A can more accurately grip the article 900.

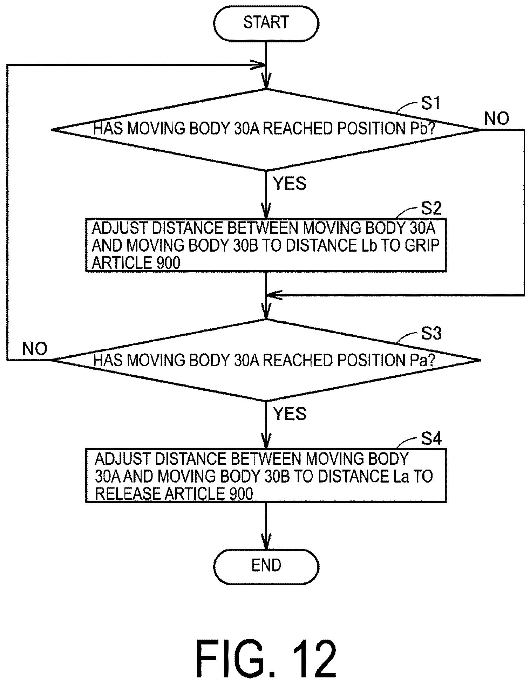

<C. Control Structure> FIG. 12 is a flowchart for explaining a flow of position control for the moving bodies 30A, 30B by the control device 4. As shown in FIG. 12, in step S1, the control device 4 determines whether or not the moving body 30A has reached the position Pb. When it is determined that the moving body 30A has reached the position Pb (YES in step S1), in step S2, the control device 4 adjusts the distance between the moving body 30A and the moving body 30B to the distance Lb so as to grip the article 900. Then, the control device 4 causes the processing to proceed to step S3.

When it is determined that the moving body 30A has not reached the position Pb (NO in step S1), the control device 4 causes the processing to proceed to step S3. In step S3, the control device 4 determines whether or not the moving body 30A has reached the position Pa. When it is determined that the moving body 30A has reached the position Pa (YES in step S3), in step S4, the control device 4 adjusts the distance between the moving body 30A and the moving body 30B to the distance La so as to release the article 900 (release gripping). When it is determined that the moving body 30A has not reached the position Pa (NO in step S3), the control device 4 causes the processing to proceed to step S1.

Specifically, the control device 4 periodically executes the processing from step S1 to step S4 for each moving body unit 3.

<D. Modification Examples> (1) First Modification Example: In the above description, the moving body unit 3 includes two moving bodies, that is, the moving body 30A and the moving body 30B. In the present modification example, the moving body unit 3 includes three moving bodies, that is, the moving body 30A, the moving body 30B, and another moving body 30 (hereinafter referred to as a "moving body 30C"). The moving body 30C is located on the leading side of the moving body 30A and is connected to the moving body 30A by a connection member similar to the connection member 39.

That is, in the moving body unit 3, the moving body 30C, the moving body 30A, and the moving body 30B are arranged in this order. Further, in the moving body unit 3, the moving body 30C and the moving body 30A are connected to each other, and the moving body 30A and the moving body 30B are connected to each other. Note that the moving body 30C and the moving body 30B are not directly connected to each other. The control device 4 controls the positions of the moving bodies 30A, 30B, 30C on the conveyance path.

A rotation mechanism for rotating the table 352 is added to the article holding portion 35. The rotation axis of the table 352 is parallel to the Z-axis. That is, the article holding portion 35 includes the gripping mechanism 351 and the rotation mechanism. The rotation mechanism typically includes a plurality of links and a plurality of joints so as to rotate the table 352 in a first direction (for example, clockwise in a top view) when the moving body 30C and the moving body 30A approach each other, and rotate the table 352 in a second direction (for example, counterclockwise in a top view) when the moving body 30C and the moving body 30A separate from each other.

The control device 4 controls the distance between the moving body 30A and the moving body 30C, thereby causing the rotation mechanism to execute rotation processing of the table 352. According to such a configuration, when the moving body 30A reaches a predetermined position (for example, the position Pa), the orientation of the article 900 on the table 352 can be changed.

The article holding portion 35 may include a tilt mechanism that tilts at least the table 352 instead of or in addition to the rotation mechanism described above. For example, when the moving body 30A reaches a predetermined position (for example, the position Pa), the tilt mechanism tilts the table 352 such that, of two end portions parallel to a traveling direction (X-axis direction) of the moving body 30A, the end portion on a side of the sidewall 201 of the track device 2 becomes higher than the other end portion. According to such a configuration, for example, the article 900 can be dropped to a predetermined position.

(2) Second Modification Example: By separately preparing article holding portions (attachments) in which the shape and size of the sliders 351A, 351B, the size of the table 352, the size of the gripping mechanism 351, and the like are made different from those of the article holding portion 35 described above so as to suit various articles to be conveyed, it is possible to perform a conveyance process suitable for the various articles.

(3) Third Modification Example: In the above description, the configuration in which the track device 2 includes the guide rail and each moving body 30 moves along the guide rail has been described as an example, but the configuration is not limited thereto. The track device 2 may have a configuration in which a plurality of planar segments (planar tiles) are arranged in a matrix.

In that case, in each segment, a plurality of coils are arranged in a matrix along the horizontal plane. That is, in a top view of the track device 2, the plurality of coils are arranged in a matrix in each segment. The moving body 30 travels over the track device 2 along a predetermined conveyance path in a state of being floated from the segments. Even when such a track device is used for the above-described moving body unit 3, the same effect as described above can be achieved.

(4) Fourth Modification Example: In the above description, as the gripping mechanism 351, the configuration in which the two sliders 351A, 351B are used to grip the article 900 has been described as an example, but the gripping mechanism is not limited thereto. The gripping mechanism may be configured such that the article 900 is gripped by a slider (movable member) and a fixed member.

<E. Supplementary Notes> (1) The gripping mechanism is expressed as a holding unit in a broader sense. The conveyance system, wherein the holding unit further includes a movable portion to which the connection member is connected, and changes a distance between the first member and the second member in accordance with a position of the movable portion, and wherein the position of the movable portion changes in accordance with a distance between the first moving body and the second moving body.

(2) The conveyance system, wherein the control device controls positions of the first moving body and the second moving body such that the distance between the first moving body and the second moving body becomes a first distance corresponding to a size of the article during conveyance of the article.

(3) The conveyance system, wherein, when the first moving body reaches a predetermined position, the control device controls the positions of the first moving body and the second moving body such that the distance between the first moving body and the second moving body becomes a second distance during conveyance of the article, and wherein the second distance is a distance at which the article is released from the first member and the second member.

(4) The conveyance system further including: a third moving body that moves along the conveyance path as a movable element of the linear motor; and a second connection member that connects the first moving body and the third moving body, wherein the control device further controls a position of the third moving body on the conveyance path, wherein the first moving body further includes a second mechanism that performs different processing from gripping of the article by the holding unit (first mechanism), and wherein the control device controls a distance between the first moving body and the third moving body to cause the second mechanism to perform the different processing.

(5) The conveyance system, wherein the first moving body further includes a table on which the article is placed, wherein the holding unit (first mechanism) grips the article on the table, and wherein the second mechanism is a mechanism that rotates the table or a mechanism that tilts the table.

The embodiments disclosed herein are merely examples, and embodiments are not limited to those described above. The scope of the present invention is defined by the terms of the claims, and is intended to include any modifications within the scope and meaning equivalent to the terms of the claims.

### Reference Signs List

1 Conveyance system; 2, 2A, 2B Track device; 3 Moving body unit; 4 Control device; 20, 20A, 20B, 20C Segment; 21 Switching controller; 22 Switch; 23 Coil; 25 Connection terminal; 30, 30A, 30B, 30C Moving body; 31 Main body portion; 35 Article holding portion; 36 Pedestal; 39 Connection member; 41 Host controller; 43 Main power supply; 44 Auxiliary power supply; 201 Sidewall; 220 Switching element; 221, 222, 223, 224 Terminal; 311, 312 Wheel; 351 Gripping mechanism; 351A, 351B Slider; 352 Table; 353 Base; 354 Projection portion; 359 Opening; 361, 527 Central portion; 421, 422 Unit; 511, 512, 513 Link; 521, 522, 523, 524 Joint; 529 Movable portion; 900 Article; N Neutral wire; P Wire.

## Claims

1. A conveyance system conveying an article along a conveyance path by a linear motor, the conveyance system comprising:
a track device that functions as a stator of the linear motor and constitutes the conveyance path;
a first moving body and a second moving body that move along the conveyance path as movable elements of the linear motor; and
a control device that controls positions of the first moving body and the second moving body on the conveyance path,
wherein the first moving body and the second moving body are connected to each other such that a distance between the first moving body and the second moving body can be adjusted,
the first moving body includes a holding unit that includes a first member and a second member and that holds the article with the first member and the second member,
the holding unit changes a distance between the first member and the second member in accordance with the distance between the first moving body and the second moving body, and
the control device controls the distance between the first moving body and the second moving body.

2. The conveyance system according to claim 1, further comprising:
a connection member that connects the first moving body and the second moving body,
wherein the connection member is connected to the first moving body so as to be movable relative to the first moving body.

3. The conveyance system according to claim 1 or 2,
wherein the track device includes a linear conveyance path and a non-linear conveyance path as the conveyance path, and
the control device controls the distance between the first moving body and the second moving body such that the distance between the first member and the second member on the linear conveyance path is equal to the distance between the first member and the second member on the non-linear conveyance path.

4. A program for controlling a conveyance system of a linear type,
in the conveyance system,
a first moving body and a second moving body moving along a predetermined conveyance path,
the first moving body and the second moving body being connected to each other such that a distance between the first moving body and the second moving body can be adjusted,
the first moving body including a holding mechanism that holds an article with a first member and a second member, and
the holding mechanism being configured to change a distance between the first member and the second member in accordance with the distance between the first moving body and the second moving body,
the program causing a computer of the conveyance system to execute:
controlling the distance between the first moving body and the second moving body to a first distance based on the first moving body reaching a first position; and
controlling the distance between the first moving body and the second moving body to a second distance based on the first moving body reaching a second position,
wherein the first distance is a distance at which the article is held by the first member and the second member, and
the second distance is a distance at which holding of the article by the first member and the second member is released.
